(19) Europäisches Patentamt
European Patent Office
Office européen des brevets

(11) **EP 3 854 844 A1**

(12) **EUROPEAN PATENT APPLICATION**
published in accordance with Art. 153(4) EPC

(43) Date of publication:
**28.07.2021 Bulletin 2021/30**

(51) Int Cl.:
**C08L 21/00** (2006.01)    **B60C 5/14** (2006.01)
**C08K 3/34** (2006.01)    **C08K 5/098** (2006.01)
**C08K 5/103** (2006.01)    **C08K 5/17** (2006.01)
**C08K 7/00** (2006.01)    **C08L 23/22** (2006.01)
**C08L 23/28** (2006.01)

(21) Application number: **19861591.6**

(22) Date of filing: **08.08.2019**

(86) International application number:
**PCT/JP2019/031485**

(87) International publication number:
**WO 2020/059359 (26.03.2020 Gazette 2020/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.09.2018 JP 2018174788**

(71) Applicant: **BRIDGESTONE CORPORATION**
**Chuo-ku**
**Tokyo 104-8340 (JP)**

(72) Inventors:
• **URATA, Tomohiro**
  **Tokyo 104-8340 (JP)**
• **YAMASAKI, Yusuke**
  **Tokyo 104-8340 (JP)**
• **FUJIWARA, Yujiro**
  **Tokyo 104-8340 (JP)**

(74) Representative: **Oxley, Robin John George**
**Marks & Clerk LLP**
**15 Fetter Lane**
**London EC4A 1BW (GB)**

(54) **RUBBER COMPOSITION AND TIRE**

(57)    An object of the present disclosure is to provide a rubber composition having superiorly low air permeability and also exhibiting low adhesion to metal members. To achieve the object, a rubber composition includes: a rubber component (A); a layered or tabular clay mineral (B); and a workability-improving agent (C), wherein the rubber composition contains no stearic acid (D) or contains no more than 0.1 parts by mass of stearic acid (D) per 100 parts by mass of the rubber component (A).

## FIG. 1

**Description**

TECHNICAL FIELD

The present invention relates to a rubber composition and a tire.

BACKGROUND ART

There has conventionally been proposed a technique of using an inner liner having low air permeability and thus made to have a small thickness in a tire, so that the tire has a reduced weight and can improve low fuel consumption property thereof.

For example, PTL 1 discloses a rubber composition obtained by blending a layered or tabular clay mineral and a glycerol fatty acid ester composition. PTL 1 proposes applying the rubber composition, which has lower air permeability than the conventional rubber composition, to an inner liner of a tire.

CITATION LIST

Patent Literature

PTL 1: WO2014/185545

SUMMARY OF THE INVENTION

Technical Problems

However, the rubber composition disclosed in PTL 1 still has room for improvement in terms of the air permeability thereof.

In view of this, the inventors of the present disclosure made a keen study and discovered that it is possible to reduce air permeability of the rubber composition disclosed in PTL 1 by using a technique including blending a resin with the rubber composition and controllably increasing a content of the resin. However, in a rubber composition manufacturing process including mixing and kneading which generally employ metal members such as a metal rotor, the rubber composition of which resin content has been increased as described above tends to adhere to a metal member like a metal rotor, thereby causing a problem of disruption and thus deterioration in productivity.

An object of the present disclosure is therefore to solve the aforementioned prior art problem and provide a rubber composition having superiorly low air permeability and also exhibiting low adhesion to metal members. Another object of the present disclosure is to provide a tire having superiorly low air permeability.

The primary features of the present disclosure for solving the aforementioned problem are as follows.

A rubber composition of the present disclosure comprises: a rubber component (A); a layered or tabular clay mineral (B); and a workability-improving agent (C), wherein the rubber composition contains no stearic acid (D) or contains no more than 0.1 parts by mass of stearic acid (D) per 100 parts by mass of the rubber component (A).

The rubber composition of the present disclosure has superiorly low air permeability and exhibits low adhesion to metal members.

In a preferable example of the rubber composition of the present disclosure, the layered or tabular clay mineral (B) is clay, mica, talc or feldspar. Low air permeability of the rubber composition further improves in this case.

In another preferable example of the rubber composition of the present disclosure, the rubber component (A) contains at least one selected from the group consisting of butyl rubber, halogenated butyl rubber, and halogenated isobutylene-p-alkylstyrene copolymer. Low air permeability of the rubber composition further improves in this case.

In yet another preferable example of the rubber composition of the present disclosure, the rubber component (A) contains at least one selected from the group consisting of butyl rubber, halogenated butyl rubber, and halogenated isobutylene-p-alkylstyrene copolymer by the total amount of ≥ 50 parts by mass per 100 parts by mass of the rubber component (A). Low air permeability of the rubber composition further improves in this case.

In yet another preferable example of the rubber composition of the present disclosure, the rubber component (A) is composed exclusively of at least one selected from the group consisting of butyl rubber, halogenated butyl rubber, and halogenated isobutylene-p-alkylstyrene copolymer. Low air permeability of the rubber composition further improves in this case.

In yet another preferable example of the rubber composition of the present disclosure, the workability-improving agent (C) is at least one selected from the group consisting of a glycerol fatty acid ester composition and a stearylamine derivative. Adhesion of the rubber composition to metal members can further be suppressed in this case.

The glycerol fatty acid ester composition preferably includes a glycerol fatty acid monoester. Adhesion of the rubber composition to metal members can further be suppressed in this case.

It is preferable that the rubber composition of the present disclosure further comprises a metal salt (E) of unsaturated carboxylic acid. Low air permeability of the rubber composition further improves in this case.

The metal salt (E) of unsaturated carboxylic acid is preferably at least one selected from the group consisting of a metal salt of acrylic acid and a metal salt of methacrylic acid. Low air permeability of the rubber composition further improves in this case.

Further, the metal salt (E) of unsaturated carboxylic acid is preferably at least one selected from the group consisting of zinc dimethacrylate and zinc monomethacrylate. Low air permeability of the rubber composition further improves in this case.

A content of the metal salt (E) of unsaturated carboxylic acid is preferably in the range of 0.1 parts by mass to 3.8 parts by mass per 100 parts by mass of the rubber component (A). It is possible to suppress rubber scorching of the rubber composition in a satisfactory manner, while further improving air permeability thereof, in this case.

It is preferable that the rubber composition of the present disclosure contains no stearic acid (D) because then low air permeability of the rubber composition further improves.

The rubber composition of the present disclosure has superiorly low air permeability and thus is preferably applicable to an inner liner of a tire.

A tire of the present disclosure characteristically uses the rubber composition described above. The tire of the present disclosure exhibits superiorly low air permeability.

According to the present disclosure, it is possible to provide a rubber composition having low adhesion to metal members, as well as superiorly low air permeability.

Further, according to the present disclosure, it is possible to provide a tire having superiorly low air permeability.

BRIEF DESCRIPTION OF THE DRAWINGS

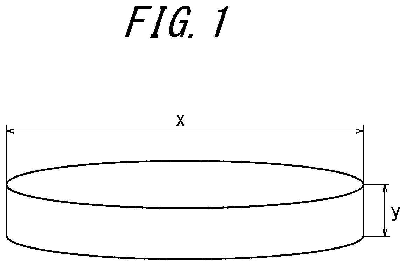

FIG. 1 is an explanatory view for determining an average aspect ratio of the layered or tabular clay mineral (B).

DETAILED DESCRIPTION

Hereinafter, a rubber composition and a tire of the present disclosure will be demonstratively described in detail, based on embodiments thereof.

< Rubber composition >

A rubber composition of the present disclosure contains: a rubber component (A); a layered or tabular clay mineral (B); and a workability-improving agent (C), wherein the rubber composition contains no stearic acid (D) or contains no more than 0.1 parts by mass of stearic acid (D) per 100 parts by mass of the rubber component (A).

The rubber composition of the present disclosure, containing the layered or tabular clay mineral (B), successfully suppresses permeation of air therethrough because the layered or tabular clay mineral (B) hinders air from permeating through the rubber composition. Further, the rubber composition of the present disclosure contains no stearic acid (D) which is generally blended with a rubber composition or contains no more than 0.1 parts by mass of stearic acid (D) per 100 parts by mass of the rubber component (A), whereby dispersibility of the layered or tabular clay mineral (B) improves and thus the low air permeability of the rubber composition further improves. No content of stearic acid (D) or a content of no more than 0.1 parts by mass of stearic acid (D) with respect to 100 parts by mass of the rubber component (A) in the rubber composition may facilitate adhesion of the rubber composition to metal members such as a metal rotor. However, in the rubber composition of the present disclosure, adhesion thereof to metal members is suppressed by blending the workability-improving agent (C) with the rubber composition.

Accordingly, the rubber composition of the present disclosure has superiorly low air permeability and also exhibits low adhesion to metal members.

The rubber component (A) of the rubber composition of the present disclosure is preferably butyl-based rubber. Specifically, preferable examples of the rubber component (A) include butyl rubber, halogenated butyl rubber, and halogenated isobutylene-p-alkylstyrene copolymer. When the rubber component (A) contains at least one selected from the group consisting of butyl rubber, halogenated butyl rubber, and halogenated isobutylene-p-alkylstyrene copolymer, low air permeability of the rubber composition further improves.

The butyl rubber described above is a rubber obtained by copolymerizing isobutylene and isoprene and occasionally referred to as "isobutylene-isoprene copolymer (IIR)". The butyl rubber is obtained preferably by causing 92 mass % to 99.5 mass % of isobutylene to react with 0.5 mass % to 8 mass % of isoprene and more preferably by causing 95 mass % to 99.5 mass % of isobutylene to react with 0.5 mass % to 5 mass % of isoprene.

The halogenated butyl rubber can be manufactured by halogenation (chlorination, bromination or the like) of butyl rubber. Examples of the halogenated butyl rubber include chlorinated butyl rubber (CIIIR), brominated butyl rubber (BrIIR), and the like.

The halogenated isobutylene-p-alkylstyrene copolymer is a halide of a copolymer of isobutylene and p-alkylstyrene. The halogenated site is preferably a p-alkylstyrene unit, in this regard, although the halogenated site may be either an isobutylene unit or a p-alkylstyrene unit. Examples of the p-alkylstyrene used as a monomer include p-methylstyrene.

The rubber component (A) may contain, in addition to the butyl rubber, the halogenated butyl rubber, and the halogenated isobutylene-p-alkylstyrene copolymer described above, a butyl-based rubber of another type and/or a rubber other than butyl-based rubbers, of which examples include natural rubber (NR), isoprene rubber (IR), styrene-butadiene copolymer rubber (SBR), butadiene rubber (BR), and the like.
Either a single type or two or more types in combination of the aforementioned examples may constitute the rubber component (A).

The rubber component (A) contains at least one selected from the group consisting of butyl rubber, halogenated butyl rubber, and halogenated isobutylene-p-alkylstyrene copolymer by the total amount of preferably $\geq$ 50 parts by mass, more preferably $\geq$ 70 parts by mass, and still more preferably $\geq$ 90 parts by mass, per 100 parts by mass of the rubber component (A). Low air permeability of the rubber composition further improves when at least one selected from the group consisting of butyl rubber, halogenated butyl rubber, and halogenated isobutylene-p-alkylstyrene copolymer is included by the total amount of $\geq$ 50 parts by mass per 100 parts by mass of the rubber component (A) (i.e. when the total content of at least one selected from the group consisting of butyl rubber, halogenated butyl rubber, and halogenated isobutylene-p-alkylstyrene copolymer in the rubber component (A) is $\geq$ 50 mass %).

It is preferable that the rubber component (A) of the present disclosure is composed exclusively of at least one selected from the group consisting of butyl rubber, halogenated butyl rubber, and halogenated isobutylene-p-alkylstyrene copolymer. Low air permeability of the rubber composition further improves when the rubber component (A) is composed exclusively of at least one selected from the group consisting of butyl rubber, halogenated butyl rubber, and halogenated isobutylene-p-alkylstyrene copolymer.

The rubber composition of the present disclosure contains the layered or tabular clay mineral (B). The layered or tabular clay mineral (B) having a layered or tabular structure significantly blocks and thus inhibits air permeation through the rubber composition.

The layered or tabular clay mineral (B) has the average aspect ratio preferably in the range of 2 to 200. The average aspect ratio of $\geq$ 2, of the layered or tabular clay mineral (B), causes faces of the layered or tabular clay mineral particles to have certain orientation and increases an effect of blocking permeation pathways of air, thereby further improving low air permeability of the rubber composition. The average aspect ratio of $\leq$ 200, of the layered or tabular clay mineral (B), causes the layered or tabular clay mineral (B) to be more evenly dispersed during the mixing and kneading process of the rubber composition, thereby further improving low air permeability of the rubber composition. The average aspect ratio of the layered or tabular clay mineral (B) is preferably in the range of 3 to 150, more preferably in the range of 5 to 100, still more preferably in the range of 5 to 50, and particularly preferably in the range of 10 to 30 in terms of improving low air permeability of the rubber composition.
The average aspect ratio of the layered or tabular clay mineral (B) is determined as a ratio of the average long diameter x with respect to the average thickness y, i.e. x/y, as shown in FIG. 1.

The average particle diameter of the layered or tabular clay mineral (B), measured by "Malvern Method", is preferably $\leq$ 50 $\mu$m, more preferably in the range of 0.2 $\mu$m to 30 $\mu$m, still more preferably in the range of 0.2 $\mu$m to 5 $\mu$m, and particularly preferably in the range of 1.5 $\mu$m to 4.5 $\mu$m. The rubber composition has satisfactory bending resistance and is more suitably applicable to an inner liner of a tire when the average particle diameter of the layered or tabular clay mineral (B) is $\leq$ 50 $\mu$m.

Either a natural product or a synthetic product can be used as the layered or tabular clay mineral (B). Examples of the layered or tabular clay mineral (B) include: clay such as kaolin-type clay, sericite-type clay, sintered clay, silane-modified clay subjected to surface treatment; smectite-type clay mineral such as montmorillonite, saponite, hectorite, beidellite, stevensite, nontronite; mica; feldspar; vermiculite; halloysite; talc; swellable mica; and the like. Among these examples, clay, mica, talc and feldspar are preferable, clay, mica, and talc are more preferable, clay and talc are still more preferable, and clay is particularly preferable, in terms of improving low air permeability of the rubber composition. Kaolin-type clay is particularly preferable among the aforementioned examples of clay. Either a single type or at least two types in combination of the aforementioned examples can be used as the layered or tabular clay mineral (B).

A content of the layered or tabular clay mineral (B) in the rubber composition of the present disclosure is: preferably $\geq$ 10 parts by mass, more preferably $\geq$ 15 parts by mass, still more preferably $\geq$ 20 parts by mass, and particularly preferably $\geq$ 25 parts by mass, with respect to 100 parts by mass of the rubber component (A) in terms of improving low air permeability of the rubber composition; and preferably ≤ 100 parts by mass, more preferably ≤ 80 parts by mass, and still more preferably ≤ 60 parts by mass, with respect to 100 parts by mass of the rubber component (A) in terms of improving workability (mixing and kneading easiness) in the mixing and kneading process of the rubber composition.

Carbon black or the like can also be used in combination with the layered or tabular clay mineral (B) as a reinforcing filler in the rubber composition of the present disclosure. Types of carbon black is not particularly restricted and examples of the grade thereof include FEF, GPF, SRF, HAF, ISAF, SAF, and the like. A content of carbon black, which is not particularly restricted, is preferably in the range of 10 to 60 parts by mass and more preferably in the range of 20 to 50 parts by mass with respect to 100 parts by mass of the rubber component (A).

The rubber composition of the present disclosure contains the workability-improving agent (C). The workability-improving agent (C) is a compounding agent which causes an effect of suppressing adhesion of the rubber composition to a metal member such as a metal rotor in a mixing and kneading facility and thus improving workability of the rubber composition.

A content of the workability-improving agent (C) in the rubber composition of the present disclosure is preferably in the range of 0.1 to 20 parts by mass and more preferably in the range of 0.1 to 10 parts by mass with respect to 100 parts by mass of the rubber component (A). A content of the workability-improving agent (C) of ≥ 0.1 parts by mass with respect to 100 parts by mass of the rubber component (A) further suppresses adhesion of the rubber composition to a metal member and a content of the workability-improving agent (C) of ≤ 20 parts by mass with respect to 100 parts by mass of the rubber component (A) ensures relatively little effect on physical properties (such as storage elastic modulus) after vulcanization of the rubber composition.

A glycerol fatty acid ester composition and a stearylamine derivative are preferable as the workability-improving agent (C). It is possible to further suppress adhesion of the rubber composition to a metal member by using a glycerol fatty acid ester composition and/or a stearylamine derivative as the workability-improving agent (C). Either a single type or at least two types in combination of the aforementioned examples can be used as the workability-improving agent (C).

A glycerol fatty acid ester composition is a composition containing a glycerol fatty acid ester. A glycerol fatty acid ester is a compound formed by ester bond of at least one of the three OH groups of glycerin and the COOH group of a fatty acid. In this regard, the glycerol fatty acid ester may be any of a glycerol fatty acid monoester (a monoglyceride) obtained by esterification of one glycerin molecule and one fatty acid molecule, a glycerol fatty acid diester (a diglyceride) obtained by esterification of one glycerin molecule and two fatty acid molecules, a glycerol fatty acid triester (a triglyceride) obtained by esterification of one glycerin molecule and three fatty acid molecules, and a mixture thereof. A glycerol fatty acid monoester is preferable among the aforementioned examples.

Preferable examples of the glycerol fatty acid ester composition include: 1) a glycerol fatty acid ester composition composed exclusively of glycerol fatty acid monoester; 2) a glycerol fatty acid ester composition as a mixture of a glycerol fatty acid monoester and a glycerol fatty acid diester; and 3) a glycerol fatty acid ester composition as a combination of the aforementioned 1) or 2) with a glycerol fatty acid triester and/or glycerin.

The glycerol fatty acid ester composition preferably includes a glycerol fatty acid monoester. Adhesion of the rubber composition to a metal member can be further suppressed when the glycerol fatty acid ester composition includes a glycerol fatty acid monoester.

A content of the glycerol fatty acid monoester in the glycerol fatty acid ester composition is preferably in the range of 35 to 100 mass %, more preferably in the range of 50 to 100 mass %, still more preferably in the range of 60 to 99 mass %, and particularly preferably in the range of 85 to 98 mass %. A content of the glycerol fatty acid monoester in the range of 50 to 100 mass % in the glycerol fatty acid ester composition further improves workability of the rubber composition and therefore is preferable in terms of ensuring satisfactory productivity.

A content of the glycerol fatty acid diester in the glycerol fatty acid ester composition is preferably ≤ 65 mass %, more preferably ≤ 55 mass %, and still more preferably ≤ 50 mass %, in terms of decreasing viscosity of the rubber composition in an unvulcanized state thereof and improving low air permeability and bending resistance of the composition.

A content of the glycerol fatty acid triester in the glycerol fatty acid ester composition is preferably ≤ 10 mass %, more preferably ≤ 5 mass %, and still more preferably ≤ 3 mass %, in terms of ensuring relatively little effect on physical properties (such as storage elastic modulus) after vulcanization of the rubber composition. A content of the glycerol fatty acid triester in the glycerol fatty acid ester composition may be ≥ 0.3 mass % in terms of ensuring satisfactory productivity.

The number of carbon atoms in a fatty acid constituting the glycerol fatty acid ester is preferably in the range of 8 to 28, more preferably in the range of 8 to 22, still more preferably in the range of 10 to 18, still much more preferably in the range of 12 to 18, particularly preferably in the range of 14 to 18, and most preferably in the range of 16 to 18, in terms of improving workability and low air permeability of the rubber composition. A fatty acid having 8 or more carbon atoms exhibits high affinity with the rubber component (A), thereby less likely causing bloom of the glycerol fatty acid ester composition than otherwise. A fatty acid having 28 or less carbon atoms can reduce the production cost of the glycerol fatty acid ester composition.

The fatty acid, although it may be either normal or branched, is preferably normal. The fatty acid, although it may be either a saturated fatty acid or an unsaturated fatty acid, is preferably a saturated fatty acid. The fatty acid is particularly preferably a normal saturated fatty acid.

Specific examples of the fatty acid include caprylic acid, pelargonic acid, capric acid, lauric acid, myristic acid, palmitic acid, stearic acid, isostearic acid, oleic acid, linoleic acid, linolenic acid, alginic acid, arachidonic acid, behenic acid, and the like. Lauric acid, myristic acid, palmitic acid and stearic acid are preferable, and palmitic acid and stearic acid are more preferable among these examples.

Specifically, glycerol monolaurate, glycerol monomyristate, glycerol monopalmitate and glycerol monostearate are preferable and glycerol monopalmitate and glycerol monostearate are more preferable as the glycerol fatty acid ester.

Some glycerin may possibly remain as an unreacted raw material in manufacturing the glycerol fatty acid ester composition. A content of glycerin remaining in the glycerol fatty acid ester composition is preferably in the range of $\leq$ 10 mass %, more preferably $\leq$ 5 mass %, and still more preferably $\leq$ 3 mass %, in terms of suppressing deterioration of heat resistance of the rubber composition. A content of glycerin remaining in the glycerol fatty acid ester composition may be $\geq$ 0.3 mass % in terms of ensuring satisfactory productivity.

The glycerol fatty acid ester composition can be manufactured by esterification of glycerin and a fatty acid or transesterification using a fat and glycerin as raw materials. Examples of a method for manufacturing a glycerol fatty acid ester composition of which monoester content has been controllably adjusted include the respective methods 1)-3) described below.

1) Method for controllably adjusting an equilibrium composition in esterification by changing a charging ratio of a fatty acid component and a glycerin component in the esterification/transesterification described above:

It should be noted that glycerin can be removed by distillation at a later stage in this method. However, the upper limit of a glycerol fatty acid monoester content is around 65 mass % according to this method in terms of the reaction characteristics thereof.

2) Method for purifying a reaction product obtained by the esterification/transesterification, by fractionation through molecular distillation or the like at a later stage, thereby collecting a glycerol fatty acid ester composition having a high purity (generally $\geq$ 95 mass %) of monoester:

3) Method for obtaining a glycerol fatty acid ester composition containing a monoester by approximately 65 mass % to 95 mass %, by mixing the glycerol fatty acid ester composition obtained by the method 2) described above with the glycerol fatty acid ester composition obtained by the method 1) described above at an optional mixing ratio:

It is possible to use a glycerol fatty acid ester with a low burden on the environment by using a substance derived from a natural product as a fat, a fatty acid or the like of the raw material thereof.

Examples of the raw material of a fatty acid which can be used include: a product obtained by hydrolysis of a vegetable fat, an animal fat or the like; and a product obtained by curing/semi-curing each of the fats or the hydrolyzed fatty acids described above. Type of a fat as the raw material is not particularly restricted and a vegetable fat and/or an animal fat is generally used. Specific examples of the fat which can be used include palm oil, soybean oil, olive oil, cotton seed oil, coconut oil, palm kernel oil, beef tallow, lard, fish oil, and the like.

A commercially available product of which monoester content has been controllably adjusted can be used as the glycerol fatty acid ester composition. Examples of such a commercially available product as described above include glycerol monostearate (e.g. "RHEODOL MS-60", "EXCEL S-95" manufactured by Kao Corporation) and the like.

A content of monoglyceride (a content of glycerol fatty acid monoester) in the glycerol fatty acid ester composition is determined based on GPC (gel permeation chromatography) analysis according to the following formula (I). Specifically, a content of monoglyceride represents a ratio of the area of monoglyceride with respect to the total areas of glycerin, monoglyceride, diglyceride (glycerol fatty acid diester), and triglyceride (glycerol fatty acid triester), which areas are determined by GPC analysis.

$$\text{Content of monoglyceride (area \%)} = \text{MG}/(\text{G} + \text{MG} + \text{DG} + \text{TG}) \times 100 \qquad \cdots \text{(I)}$$

In the formula (I) above, G represents an area of glycerin in GPC, MG represents an area of monoglyceride in GPC, DG represents an area of diglyceride in GPC, and TG represents an area of triglyceride in GPC,

The measurement conditions in the GPC are as follows.

< Measurement conditions in GPC >

The GPC measurement is carried out by: preparing a measurement device described below; flowing THF (tetrahydrofuran) as an eluent at a flow rate of 0.6 mL/minute in the measurement device; confirming that a column is in a stable state in a thermostatic bath at 40 °C; and injecting 10 μL of a sample solution in which the sample (1 mass %) has been dissolved in THF.

Reference material: monodisperse polystyrene

Detector: RI-8022 (manufactured by Tosoh Corporation)

Measurement device: HPLC-8220 GPC (manufactured by Tosoh Corporation)

Analysis column: TSK-GEL SUPER H1000 ($\times$ 2) and TSK-GEL SUPER H2000 ($\times$ 2) are connected in series (manufactured by Tosoh Corporation)

As with the monoglyceride, a content of diglyceride in the glycerol fatty acid ester composition represents a ratio of the area of diglyceride with respect to the total areas of glycerin, monoglyceride, diglyceride, and triglyceride, which areas are determined by GPC analysis. A content of triglyceride in the glycerol fatty acid ester composition represents a ratio of the area of triglyceride with respect to the total areas of glycerin, monoglyceride, diglyceride, and triglyceride, which areas are determined by GPC analysis.

Examples of the glycerol fatty acid ester composition of which monoglyceride content has been controllably adjusted include: a glyceryl caprylate-containing composition in which the fatty acid has 8 carbon atoms; a glyceryl decanoate-containing composition in which the fatty acid has 10 carbon atoms; a glyceryl laurate-containing composition in which the fatty acid has 12 carbon atoms; a glyceryl myristate-containing composition in which the fatty acid has 14 carbon atoms; a glyceryl palmitate-containing composition in which the fatty acid has 16 carbon atoms; a glyceryl stearate-containing composition in which the fatty acid has 18 carbon atoms; a glyceryl behenate-containing composition in which the fatty acid has 22 carbon atoms; a glyceryl montanate-containing composition in which the fatty acid has 28 carbon atoms; and the like. A glyceryl laurate-containing composition, a glyceryl palmitate-containing composition, and a glyceryl stearate-containing composition are preferable among these examples. At least one type of the glycerol fatty acid ester composition of which monoester content has been controllably adjusted is optionally selected and blended with other components of the rubber composition.

The glycerol fatty acid ester composition is preferably composed of a glycerol fatty acid ester. The glycerol fatty acid ester is an ester of glycerin and two or more types of fatty acids, wherein the fatty acid component having the largest content among the two or more types of fatty acids constituting the glycerol fatty acid ester accounts for 10 mass % to 90 mass % of the entire fatty acids; and the monoester component accounts for 50 mass % to 100 mass % of the glycerol fatty acid ester.

In the present disclosure, a fatty acid and another fatty acid are regarded as the same fatty acid component when they share the same the number of alkyl carbon atoms, the same configuration, and the same bonding state. In other words, each of the stereoisomers of a fatty acid represents an independent fatty acid component. For example, n-1-octadacanoic acid (standard, straight chain stearic acid), 2-octyl-1-decanoic acid (stearic acid branched at the 2-position), cis-9-octadecenoic acid (standard oleic acid), cis,cis-9,12-octadecadienoic acid (standard linoleic acid) are regarded as different fatty acid components, respectively, although all of them are $C_{18}$ fatty acids.

In respect of mass ratios of the two or more types of fatty acids, a mass ratio of the fatty acid component having the largest content among the two or more types of fatty acids is preferably in the range of 10-90 mass % of the entire fatty acids. Said mass ratio is more preferably in the range of 15-80 mass %, still more preferably in the range of 20-70 mass %, and particularly preferably in the range of 30-60 mass % of the entire fatty acids in terms of further improving workability of the rubber composition.

Further, the fatty acid component having the largest content and the fatty acid having the second largest content, among the two or more types of fatty acids as the raw material of the glycerol fatty acid ester, are preferably a combination of a $C_{16}$ fatty acid and a $C_{18}$ fatty acid. In this regard, when the glycerol fatty acid ester is an ester of glycerin and a $C_{16}$ fatty acid and an ester of glycerin and a $C_{18}$ fatty acid, a mass ratio of the $C_{16}$ fatty acid with respect to the $C_{18}$ fatty acid (the $C_{16}$ fatty acid/the $C_{18}$ fatty acid) is preferably in the range of 90/10 to 10/90, more preferably in the range of 80/20 to 20/80, and still more preferably in the range of 75/25 to 25/75. Workability of the rubber composition further improves when a mass ratio of the $C_{16}$ fatty acid with respect to the $C_{18}$ fatty acid is set to be within the aforementioned ranges. A content of the fatty acid component (mass %) is measured by subjecting the glycerol fatty acid ester to saponification and methyl esterification according to the standard methods for the analysis of fats, oils and related materials, enacted by the Japan Oil Chemists' Society, and then GPC analysis.

Preferable examples of the glycerol fatty acid ester composition include: a glycerol fatty acid ester composition containing a glycerol fatty acid monoester and a glycerol fatty acid diester, wherein a content of the glycerol fatty acid monoester in the glycerol fatty acid ester composition is $\geq$ 35 mass %; and a glycerol fatty acid ester composition containing a glycerol fatty acid monoester and a glycerol fatty acid diester, wherein a content of the glycerol fatty acid diester in the glycerol fatty acid ester composition is $\leq$ 65 mass %. The glycerol fatty acid ester composition as described above successfully improves bending resistance of the rubber composition.

A content of the glycerol fatty acid ester composition is preferably ≥ 0.5 parts by mass, more preferably ≥ 1 parts by mass, still more preferably ≥ 2 parts by mass, and particularly preferably ≥ 3 parts by mass, with respect to 100 parts by mass of the rubber component (A) in terms of improving workability (adhesion inhibition to a metal member), low air permeability and bending resistance of the rubber composition. Further, a content of the glycerol fatty acid ester composition is preferably ≤ 20 parts by mass, more preferably ≤ 15 parts by mass, still more preferably ≤ 12 parts by mass, particularly preferably ≤ 11 parts by mass, and most preferably ≤ 10 parts by mass, with respect to 100 parts by mass of the rubber component (A) in terms of ensuring relatively little effect on physical properties (such as storage elastic modulus) after vulcanization of the rubber composition. In other words, a content of the glycerol fatty acid ester composition is preferably in the range of 0.5 to 20 parts by mass, more preferably in the range of 1 to 15 parts by mass, still more preferably in the range of 2 to 12 parts by mass, particularly preferably in the range of 3 to 11 parts by mass, and most preferably in the range of 3 to 10 parts by mass, with respect to 100 parts by mass of the rubber component (A). A content of the glycerol fatty acid ester composition is preferably ≥ 0.1 parts by mass, more preferably ≥ 0.25 parts by mass, still more preferably ≥ 0.5 parts by mass, and particularly preferably ≥ 1 parts by mass, with respect to 100 parts by mass of the layered or tabular clay mineral (B) in terms of improving workability (adhesion inhibition to a metal member) of the rubber composition. Further, a content of the glycerol fatty acid ester composition is preferably ≤ 20 parts by mass, more preferably ≤ 15 parts by mass, still more preferably ≤ 12 parts by mass, particularly preferably ≤ 10 parts by mass, more particularly preferably ≤ 8 parts by mass, and most preferably ≤ 7 parts by mass, with respect to 100 parts by mass of the layered or tabular clay mineral (B) in terms of ensuring relatively little effect on physical properties (such as storage elastic modulus) after vulcanization of the rubber composition. In other words, a content of the glycerol fatty acid ester composition is preferably in the range of 0.1 to 20 parts by mass, more preferably in the range of 0.25 to 15 parts by mass, still more preferably in the range of 0.25 to 10 parts by mass, particularly preferably in the range of 0.5 to 8 parts by mass, and most preferably in the range of 1 to 7 parts by mass, with respect to 100 parts by mass of the layered or tabular clay mineral (B).

A content of glycerol fatty acid triester in the rubber composition of the present disclosure is preferably ≤ 0.5 parts by mass, more preferably ≤ 0.3 parts by mass, and still more preferably ≤ 0.1 parts by mass, with respect to 100 parts by mass of the rubber component (A) in terms of ensuring relatively little effect on physical properties (such as storage elastic modulus) after vulcanization of the rubber composition. The content of the glycerol fatty acid triester may be ≥ 0.01 parts by mass in terms of ensuring satisfactory productivity, in this regard.

A content of glycerin in the rubber composition of the present disclosure is preferably ≤ 0.5 parts by mass, more preferably ≤ 0.3 parts by mass, still more preferably ≤ 0.1 parts by mass, with respect to 100 parts by mass of the rubber component (A) in terms of suppressing deterioration of heat resistance of the rubber composition. The content of the glycerin may be ≥ 0.01 parts by mass in terms of ensuring satisfactory productivity, in this regard.

The stearylamine derivative is a derivative of a stearylamine and preferably a compound in which hydrogen(s) of the amino group of the stearylamine has been substituted with an alkyl group. Examples of the alkyl group include methyl, ethyl, propyl, butyl group, and the like.

Specific examples of the stearylamine derivative include dimethylstearylamine, diethylstearylamine, dipropylstearylamine, ethylmethylstearylamine, ethylpropylstearylamine, methylpropylstearylamine, and the like. Dimethylstearylamine is preferable among these examples.

A content of the stearylamine derivative is preferably in the range of 0.1 to 10 parts by mass, more preferably in the range of 0.2 to 5 parts by mass, and still more preferably in the range of 0.5 to 2 parts by mass, with respect to 100 parts by mass of the rubber component (A). A content of the stearylamine derivative of ≥ 0.1 parts by mass with respect to 100 parts by mass of the rubber component (A) further successfully suppresses adhesion of the rubber composition to a metal member. A content of the stearylamine derivative of ≤ 10 parts by mass with respect to 100 parts by mass of the rubber component (A) ensures relatively little effect on physical properties (such as storage elastic modulus) after vulcanization of the rubber composition.

The rubber composition of the present disclosure contains no stearic acid (D) or contains no more than 0.1 parts by mass of stearic acid (D) per 100 parts by mass of the rubber component (A). The stearic acid (D) is widely utilized as a vulcanization auxiliary for a rubber composition. However, the rubber composition of the present disclosure, adapted to contain no stearic acid (D) or contain no more than 0.1 parts by mass of stearic acid (D) per 100 parts by mass of the rubber component (A), successfully suppresses aggregation of the layered or tabular clay mineral (B) and improves dispersibility of the layered or tabular clay mineral (B), thereby significantly improving low air permeability of the rubber composition.

In this regard, a content of the stearic acid (D) in the rubber composition of the present disclosure is preferably ≤ 0.05 parts by mass, more preferably ≤ 0.02 parts by mass, and particularly preferably 0 parts by mass, per 100 parts by mass of the rubber component (A). The smaller content of stearic acid (D) results in the lower air permeability of the rubber composition. Low air permeability of the rubber composition even further improves when the rubber composition contains no stearic acid (D).

The mechanism of successful suppression of aggregation of the layered or tabular clay mineral (B) when the rubber composition contains no stearic acid (D) or contains no more than 0.1 parts by mass of stearic acid (D) per 100 parts by mass of the rubber component (A) is not clear and any restriction on the present disclosure by the mechanism is not intended, either. It is assumed that elimination/reduction of stearic acid (D) as an acidic component makes pH of the rubber composition high, thereby inhibiting aggregation of the layered or tabular clay mineral (B) in the rubber composition.

It is preferable that the rubber composition of the present disclosure further contains a metal salt (E) of unsaturated carboxylic acid. Low air permeability of the rubber composition further improves when the rubber composition contains a metal salt (E) of unsaturated carboxylic acid.

It should be noted in this regard that, if a content of stearic acid (D) in the rubber composition were to exceed 0.1 parts by mass per 100 parts by mass of the rubber component (A), the stearic acid (D) would be bonded to the metal salt (E) of unsaturated carboxylic acid, thereby: inhibiting formation of bonding between the metal salt (E) of unsaturated carboxylic acid and the layered or tabular clay mineral (B); and causing a state where the stearic acid (D) is bonded to the rubber component (A) by way of the metal salt (E) of unsaturated carboxylic acid like a pendant because the metal salt (E) of unsaturated carboxylic acid, having the stearic acid (D) bonded thereto, is bonded to the rubber component (A). As a result, low air permeability of the rubber composition would possibly deteriorate.

In contrast, in the rubber composition of the present disclosure in which a content of stearic acid (D) therein is set to be zero or $\leq$ 0.1 parts by mass per 100 parts by mass of the rubber component (A), the stearic acid (D) does not inhibit formation of bonding between the metal salt (E) of unsaturated carboxylic acid and the layered or tabular clay mineral (B); and thus the metal salt (E) of unsaturated carboxylic acid smoothly couples the rubber component (A) and the layered or tabular clay mineral (B), whereby low air permeability of the rubber composition can further improve.

Examples of the unsaturated carboxylic acid constituting the metal salt (E) of unsaturated carboxylic acid include $\alpha,\beta$-ethylenic unsaturated carboxylic acid such as acrylic acid, methacrylic acid, ethacrylic acid, crotonic acid, angelic acid, cinnamic acid, and the like. Acrylic acid and methacrylic acid are preferable as the unsaturated carboxylic acid among these examples. That is, a metal salt of acrylic acid and a metal salt of methacrylic acid are preferable as the metal salt (E) of unsaturated carboxylic acid. Low air permeability of the rubber composition can be further improved when the rubber composition contains a metal salt of acrylic acid and/or a metal salt of methacrylic acid.

Examples of a metal constituting the metal salt (E) of unsaturated carboxylic acid include sodium, potassium, lithium, calcium, barium, magnesium, zinc, aluminum, tin, zirconium, cadmium, and the like. Among these examples, sodium, magnesium, zinc, and aluminum are preferable and zinc is particularly preferable as the metal. That is, a zinc salt of unsaturated carboxylic acid is preferable as the metal salt (E) of unsaturated carboxylic acid.

Specific examples of the metal salt (E) of unsaturated carboxylic acid include zinc diacrylate, zinc dimethacrylate, zinc monoacrylate, zinc monomethacrylate, magnesium diacrylate, magnesium dimethacrylate, magnesium monoacrylate, magnesium monomethacrylate, and the like. Zinc dimethacrylate and zinc monomethacrylate are preferable among these examples. Low air permeability of the rubber composition can be further improved when the rubber composition contains zinc dimethacrylate and/or zinc monomethacrylate.

Either a single type or two or more types in combination of the aforementioned examples may be used as the metal salt (E) of unsaturated carboxylic acid.

A content of the metal salt (E) of unsaturated carboxylic acid is preferably in the range of 0.1 to 3.8 parts by mass, more preferably in the range of 0.2 to 3 parts by mass, and still more preferably in the range of 0.3 to 2 parts by mass, with respect to 100 parts by mass of the rubber component (A). A content of the metal salt (E) of unsaturated carboxylic acid of $\geq$ 0.1 parts by mass with respect to 100 parts by mass of the rubber component (A) further successfully improves low air permeability of the rubber composition. A content of the metal salt (E) of unsaturated carboxylic acid of $\leq$ 3.8 parts by mass with respect to 100 parts by mass of the rubber component (A) ensures satisfactory suppression of rubber scorching of the rubber composition.

The proportion of a content of the metal salt (E) of unsaturated carboxylic acid with respect to a content of the layered or tabular clay mineral (B) is preferably in the range of 0.1 to 38 mass %, more preferably in the range of 0.2 to 30 mass %, and still more preferably in the range of 0.5 to 10 mass %. Setting the proportion of a content of the metal salt (E) of unsaturated carboxylic acid with respect to a content of the layered or tabular clay mineral (B) to be within the range of 0.1 to 38 mass % enables effective coupling of the layered or tabular clay mineral (B) and the metal salt (E) of unsaturated carboxylic acid, whereby low air permeability of the rubber composition can be further improved.

In the rubber composition of the present disclosure, the rubber component (A), the layered or tabular clay mineral (B), the workability-improving agent (C), and the metal salt (E) of unsaturated carboxylic acid described above may optionally be blended with a compounding agent generally used in the rubber industry such as a vulcanizing agent like sulfur, a vulcanization accelerator, a softening agent, an antioxidant, a resin (a tackifier) or the like unless addition of the compounding agent undesirably affects the object of the present disclosure. A commercially available product can be suitably used as the compounding agent.

The rubber composition of the present disclosure is applicable to various types of rubber articles in which low air permeability is desired. The rubber composition of the present disclosure is particularly preferable for use in an inner liner of a tire. An inner liner of a tire, using the rubber composition of the present disclosure, can suppress permeation of air in a satisfactory manner even when the inner liner is thin and improve low fuel consumption property of the tire due to the small thickness thereof.

< Tire >

A tire of the present disclosure characteristically uses the rubber composition described above. The tire of the present disclosure exhibits superiorly low air permeability because the tire employs the rubber composition.

The tire of the present disclosure may be obtained either by molding the rubber composition in an unvulcanized state and then vulcanizing the rubber composition thus molded or by semi-vulcanizing the rubber composition in a pe-vulcanization process, molding a semi-vulcanized rubber thus obtained, and then subjecting the semi-vulcanized rubber thus molded to the main vulcanization.

The tire of the present disclosure is preferably an pneumatic tire and the rubber composition described above is preferably applied to an inner liner. The pneumatic tire using the rubber composition described above for an inner liner exhibits superiorly low air permeability and also successfully improves the low fuel consumption property thereof due to a small thickness of the inner liner. Examples of gas to inflate the pneumatic tire with include inert gas such as nitrogen, argon, helium or the like, as well as ambient air or air of which oxygen partial pressure has been adjusted.

EXAMPLES

The present disclosure will be described further in detail by Examples hereinafter. The Examples by no means restrict the present disclosure.

< Preparation of rubber composition and evaluation thereof >

(Examples 1, 2 and 5 to 9 and Comparative Examples 1, 2 and 4 to 10)

Rubber composition samples of Examples 1, 2 and 5 to 9 and Comparative Examples 1, 2 and 4 to 10 were prepared, respectively, according to the blend formulations shown in Table 1 and Table 2 by mixing and kneading by using a conventional Banbury mixer. Adhesion of each of the rubber composition samples to a metal rotor was evaluated according to the criteria shown below when the sample was prepared.

Air permeability and rubber scorching properties were evaluated for each of the rubber composition samples thus obtained by the methods described below. Further, an area of aggregate of the layered or tabular clay mineral was measured for the rubber composition sample of Example 1 by the method described below. The results are shown in Table 1 and Table 2.

(1) Air permeability

A vulcanization rubber test piece was prepared from each of the rubber composition samples. An air permeation rate of each vulcanization rubber test piece was measured according to JIS K 6275-1 (2009) by using an air permeability tester "M-C1" (manufactured by TOYO SEIKI KOGYO CO., LTD.) at 60 °C. The air permeation rates of the vulcanization rubber test pieces thus measured were respectively expressed by indices relative to the air permeation rate of Comparative Example 1 being "100". The smaller index value represents the smaller air permeation rate, i.e. the better low air permeability.

(2) Adhesion of rubber to metal

Smooth discharging property, affected by adhesion of the rubber composition to the metal rotor, of each of the rubber composition samples was evaluated when the rubber composition was dropped after the mixing and kneading process by the Banbury mixer. The evaluation criteria were as follows.

   "o" (Satisfactory): No problem with the smooth discharging property
   "×" (Not satisfactory): Difficulty in smooth discharging due to adhesion

(3) Rubber scorching

Rubber scorching was evaluated by: plotting a (torque-versus-time) vulcanization curve of each of the rubber composition samples according to JIS K6300-1: 2013 by using a curast meter at 145 °C; determining time (T0.1) taken for the torque-versus-time vulcanization curve to reach 10 % of the maximum torque value thereof; and evaluating the rubber scorching, based on the T0.1 thus determined, according to the criteria shown below.

    "o" (Satisfactory): T0.1 was 3 minutes or more
    "×" (Not satisfactory): T0.1 was less than 3 minutes

(4) Area of aggregate ($\mu$m$^2$)

The average area of aggregate of the layered or tabular clay mineral was determined by: obtaining a SEM (scanning electron microscope) image of the layered or tabular clay mineral portions of each of the rubber composition samples, in a measuring range, for example, 11 $\mu$m × 8 $\mu$m (1000 pixels × 700 pixels); measuring aggregate areas of the layered or tabular clay mineral portions in the SEM image; and calculating the number average (the arithmetic mean) of the aggregate areas thus measured. Particles adjacent to the edges (sides) of the SEM image were not counted and particles having the size of ≤ 50 pixels were regarded as noises and not counted, either, in the determination process. The smaller value of the average aggregate area indicates the more dispersed state, i.e. the better state, of the layered or tabular clay mineral.

(Comparative Example 3)

A rubber composition sample of Comparative Example 3 was prepared according to the blend formulation shown in Table 1 by mixing and kneading by using a conventional Banbury mixer. Adhesion of the rubber composition sample to a metal rotor was evaluated according to the criteria shown above when the sample was prepared.
Air permeability and rubber scorching properties were evaluated for the rubber composition sample thus obtained by the methods described above. Further, an area of aggregate of the layered or tabular clay mineral is measured for the rubber composition sample by the method described above. The results are shown in Table 1.

(Examples 3 and 4)

Rubber composition samples of Examples 3 and 4 are prepared according to the blend formulations shown in Table 1 by mixing and kneading by using a conventional Banbury mixer. Adhesion of each of the rubber composition samples to a metal rotor is evaluated according to the criteria shown above when the sample is prepared.
Air permeability and rubber scorching properties are evaluated for each of the rubber composition samples thus obtained by the methods described above. The results are shown in Table 1.

[Table 1]

| | | | Example 1 | Example 2 | Example 3 | Example 4 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|---|---|---|---|
| Blend formulation | Halogenated butyl rubber *1 | Parts by mass | 100 | 100 | 100 | 80 | 100 | 100 | 100 | 100 | 100 | 100 | 80 | 100 | 100 |
| | Halogenated isobutylene-p-alkylstyrene copolymer *2 | | 0 | 0 | 0 | 20 | 0 | 0 | 0 | 0 | 0 | 0 | 20 | 0 | 0 |
| | Carbon black *3 | | 40 | 40 | 40 | 40 | 40 | 40 | 40 | 40 | 40 | 40 | 40 | 70 | 70 |
| | Clay *4 | | 30 | 30 | 30 | 30 | 30 | 30 | 30 | 30 | 30 | 30 | 30 | 0 | 0 |
| | Process oil *5 | | 5 | 5 | 5 | 5 | 5 | 5 | 5 | 5 | 5 | 5 | 5 | 5 | 5 |
| | DCPD resin *6 | | 0 | 0 | 2 | 0 | 0 | 0 | 0 | 0 | 2 | 20 | 0 | 0 | 0 |
| | Stearic acid | | 0 | 0 | 0 | 0 | 1.5 | 0 | 1.5 | 1.5 | 1.5 | 1.5 | 1.5 | 1.5 | 0 |
| | Vulcanization accelerator *7 | | 1 | 1 | 1 | 1 | 1 | 1 | 1 | 1 | 1 | 1 | 1 | 1 | 1 |
| | Sulfur | | 1 | 1 | 1 | 1 | 1 | 1 | 1 | 1 | 1 | 1 | 1 | 1 | 1 |
| | Glycerol fatty acid ester composition *8 | | 1 | 0 | 1 | 1 | 0 | 0 | 1 | 0 | 0 | 0 | 0 | 1 | 1 |
| | Dimethylstearylamine *9 | | 0 | 1 | 0 | 0 | 0 | 0 | 0 | 1 | 0 | 0 | 0 | 0 | 0 |
| | Zinc dimethacrylate *10 | | 0 | 0 | 0 | 0 | 0 | 0 | 0 | 0 | 0 | 0 | 0 | 0 | 0 |
| | Zinc monomethacrylate *11 | | 0 | 0 | 0 | 0 | 0 | 0 | 0 | 0 | 0 | 0 | 0 | 0 | 0 |
| | Zinc white | | 2 | 2 | 2 | 2 | 2 | 2 | 2 | 2 | 2 | 2 | 2 | 2 | 2 |
| Physical properties | Area of aggregate of the layered or tabular clay mineral | $\mu$m$^2$ | 7.1 | - | - | - | - | - | 7.2 | - | - | - | - | - | - |
| Evaluation results | Air permeability | Index | 85 | 85 | 83 | 80 | 100 | 90 | 98 | 98 | 95 | 80 | 95 | 105 | 105 |
| | Adhesion of rubber to metal | - | O | O | O | O | O | × | O | O | O | × | O | O | O |
| | Rubber scorching | - | O | O | O | O | O | O | O | O | O | O | O | O | O |

[Table 2]

| | | | Example 5 | Example 6 | Example 7 | Example 8 | Comp. Ex. 10 | Example 9 |
|---|---|---|---|---|---|---|---|---|
| Blend formulation | Halogenated butyl rubber *1 | Parts by mass | 100 | 100 | 100 | 100 | 100 | 100 |
| | Halogenated isobutylene-p-alkylstyrene copolymer *2 | | 0 | 0 | 0 | 0 | 0 | 0 |
| | Carbon black *3 | | 40 | 40 | 40 | 40 | 40 | 40 |
| | Clay *4 | | 30 | 30 | 30 | 30 | 30 | 30 |
| | Process oil *5 | | 5 | 5 | 5 | 5 | 5 | 5 |
| | DCPD resin *6 | | 0 | 0 | 0 | 0 | 0 | 0 |
| | Stearic acid | | 0 | 0 | 0 | 0 | 1.3 | 0 |
| | Vulcanization accelerator *7 | | 1 | 1 | 1 | 1 | 1 | 1 |
| | Sulfur | | 1 | 1 | 1 | 1 | 1 | 1 |
| | Glycerol fatty acid ester composition *8 | | 1 | 1 | 1 | 0.5 | 0 | 1 |
| | Dimethylstearylamine *9 | | 0 | 0 | 0 | 0 | 0 | 0 |
| | Zinc dimethacrylate *10 | | 1.1 | 0 | 0 | 0 | 0 | 0 |
| | Zinc monomethacrylate *11 | | 0 | 0.8 | 0.4 | 0.8 | 0.8 | 4 |
| | Zinc white | | 2 | 2 | 2 | 2 | 2 | 2 |
| Evaluation results | Air permeability | Index | 80 | 75 | 80 | 80 | 105 | 80 |
| | Adhesion of rubber to metal | - | ○ | ○ | ○ | ○ | ○ | ○ |
| | Rubber scorching | - | ○ | ○ | ○ | ○ | ○ | × |

*1　Halogenated butyl rubber: Brominated butyl rubber (BRIIR), "Bromobutyl 2255" manufactured by Exxon Mobile Corporation

*2　Halogenated isobutylene-p-alkylstyrene copolymer: Brominated isobutylene-p-methylstyrene copolymer, "Exxpro3745" manufactured by Exxon Mobile Corporation

*3　Carbon black: N660, "STERLING V" manufactured by Carbot Corporation, Specific surface area determined by nitrogen adsorption method = 26 m$^2$/g

*4　Clay: Flat clay (Kaolin-type clay having a large aspect ratio), "POLYFIL DL" manufactured by KaMin LLC., the average aspect ratio = 20, the average particle diameter = 3.2 μm

*5　Process oil: "Blown Asphalt 10-20" manufactured by Nippon Oil Corporation

*6　DCPD resin: Dicyclopentadiene resin, "Escorez 8180" manufactured by Exxon Mobile Corporation

*7　Vulcanization accelerator: Di-2-benzothiazolyldisulfide, "Nocceler DM" manufactured by OUCHI SHINKO CHEMICAL INDUSTRIAL CO., LTD.

*8　Glycerol fatty acid ester composition: A glycerol fatty acid ester composition prepared by the method described in Production Example 1 of WO2014/185545 (PTL 1), except that octanoic acid as the fatty acid in Production Example 1 was replaced with an

equimolar palm-derived hydrogenated fatty acid and the product thus synthesized was subjected to molecular distillation (content of glycerol fatty acid monoester = 97 mass %, the component fatty acid was composed of 54 mass % of stearic acid, 42 mass % of palmitic acid, and 4 mass % of other fatty acids)

*9    Dimethylstearylamine: "FARMIN DM8098" manufactured by Kao Corporation

*10   Zinc dimethacrylate: ZDMA, "Dymalink 709" manufactured by Total Cray Valley

*11   Zinc monomethacrylate: ZMMA, "Dymalink 708F" manufactured by Total Cray Valley

It is understood from the results shown in Table 1 that the rubber compositions of Examples according to the present disclosure unanimously exhibit low adhesion to metal members, as well as superiorly low air permeability.

Further, it is understood from the results of Examples 5 to 9 shown in Table 2 that air permeability of the rubber composition further improves when the rubber composition contains a metal salt (E) of unsaturated carboxylic acid.

Example 1 differs from Comparative Example 3 only in that the former does not contain stearic acid but the latter does. Example 1 has a significantly smaller area of clay aggregate than Comp. Example 3 does. It is therefore understood that setting a content of stearic acid (D) to be zero or ≤ 0.1 parts by mass per 100 parts by mass of the rubber component (A) significantly improves dispersibility of the clay.

INDUSTRIAL APPLICABILITY

The rubber composition of the present disclosure is advantageously applicable to an inner liner of a tire.

Claims

1.   A rubber composition, comprising:

   a rubber component (A);
   a layered or tabular clay mineral (B); and
   a workability-improving agent (C),
   wherein the rubber composition contains no stearic acid (D) or contains no more than 0.1 parts by mass of stearic acid (D) per 100 parts by mass of the rubber component (A).

2.   The rubber composition of claim 1, wherein the layered or tabular clay mineral (B) is clay, mica, talc or feldspar.

3.   The rubber composition of claim 1 or 2, wherein the rubber component (A) contains at least one selected from the group consisting of butyl rubber, halogenated butyl rubber, and halogenated isobutylene-p-alkylstyrene copolymer.

4.   The rubber composition of any of claims 1 to 3, wherein the rubber component (A) contains at least one selected from the group consisting of butyl rubber, halogenated butyl rubber, and halogenated isobutylene-p-alkylstyrene copolymer by the total amount of ≥ 50 parts by mass per 100 parts by mass of the rubber component (A).

5.   The rubber composition of any of claims 1 to 4, wherein the rubber component (A) is composed exclusively of at least one selected from the group consisting of butyl rubber, halogenated butyl rubber, and halogenated isobutylene-p-alkylstyrene copolymer.

6.   The rubber composition of any of claims 1 to 5, wherein the workability-improving agent (C) is at least one selected from the group consisting of a glycerol fatty acid ester composition and a stearylamine derivative.

7.   The rubber composition of claim 6, wherein the glycerol fatty acid ester composition includes a glycerol fatty acid monoester.

8. The rubber composition of any of claims 1 to 7, further comprising a metal salt (E) of unsaturated carboxylic acid.

9. The rubber composition of claim 8, wherein the metal salt (E) of unsaturated carboxylic acid is at least one selected from the group consisting of a metal salt of acrylic acid and a metal salt of methacrylic acid.

10. The rubber composition of claim 8 or 9, wherein the metal salt (E) of unsaturated carboxylic acid is at least one selected from the group consisting of zinc dimethacrylate and zinc monomethacrylate.

11. The rubber composition of any of claims 8 to 10, wherein a content of the metal salt (E) of unsaturated carboxylic acid is in the range of 0.1 parts by mass to 3.8 parts by mass per 100 parts by mass of the rubber component (A).

12. The rubber composition of any of claims 1 to 11, wherein it contains no stearic acid (D).

13. The rubber composition of any of claims 1 to 12, wherein it is for use in an inner liner of a tire.

14. A tire, using the rubber composition of any of claims 1 to 13.

# FIG. 1

## INTERNATIONAL SEARCH REPORT

| International application No. |
|---|
| PCT/JP2019/031485 |

### A. CLASSIFICATION OF SUBJECT MATTER

Int. Cl. C08L21/00(2006.01)i, B60C5/14(2006.01)i, C08K3/34(2006.01)i, C08K5/098(2006.01)i, C08K5/103(2006.01)i, C08K5/17(2006.01)i, C08K7/00(2006.01)i, C08L23/22(2006.01)i, C08L23/28(2006.01)i

According to International Patent Classification (IPC) or to both national classification and IPC

### B. FIELDS SEARCHED

Minimum documentation searched (classification system followed by classification symbols)

Int. Cl. C08L21/00, B60C5/14, C08K3/34, C08K5/098, C08K5/103, C08K5/17, C08K7/00, C08L23/22, C08L23/28

Documentation searched other than minimum documentation to the extent that such documents are included in the fields searched

Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2002-88208 A (BRIDGESTONE CORP.) 27 March 2002, claims, paragraph [0009], examples & US 2002/0151636 A1, claims, paragraph [0029], examples & EP 1195402 A1 | 1-6, 12-14<br>7<br>8-11 |
| X<br>Y<br>A | JP 2002-88209 A (BRIDGESTONE CORP.) 27 March 2002, claims, paragraph [0010], examples (Family: none) | 1-4, 6, 12-14<br>7<br>5, 8-11 |
| X<br>A | WO 2016/084862 A1 (ASAHI GLASS CO., LTD.) 02 June 2016, claims, paragraph [0028], examples & US 2017/0218173 A1, claims, paragraphs [0092], [0093], examples & EP 3225659 A1 & CN 107001751 A & KR 10-2017-0092549 A | 1-2, 6-7, 12<br>3-5, 8-11, 13-14 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05.09.2019 | 17.09.2019 |

| Name and mailing address of the ISA/<br>　Japan Patent Office<br>　3-4-3, Kasumigaseki, Chiyoda-ku,<br>　Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2019/031485 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 2014/185545 A1 (BRIDGESTONE CORP.) 20 November 2014, claims, paragraphs [0020]-[0023], examples & US 2016/0101650 A1, claims, paragraphs [0027]-[0034], examples & EP 2998350 A1 & CN 105229073 A | 7<br>1-6, 8-14 |
| A | WO 2003/067558 A1 (KANEBO, LTD.) 14 August 2003, & AU 2002361132 A1 | 1-14 |
| A | JP 2017-19891 A (THE YOKOHAMA RUBBER CO., LTD.) 26 January 2017, & EP 3321318 A1 & CN 107735449 A | 1-14 |
| A | WO 2016/139915 A1 (BRIDGESTONE CORP.) 09 September 2016, & US 2018/0030215 A1 & EP 3266817 A1 & CN 107406629 A | 1-14 |
| A | JP 2009-242575 A (THE YOKOHAMA RUBBER CO., LTD.) 22 October 2009 (Family: none) | 1-14 |
| A | JP 11-35754 A (BRIDGESTONE CORP.) 09 February 1999 (Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014185545 A